# EUROPEAN PATENT APPLICATION

(11) **EP 4 275 500 A1**
(43) Date of publication of application: **15.11.2023**
(21) Application number: 22382459.0
(22) Date of filing: 12.05.2022
(51) Int. Cl.: A22C 9/00, A22C 17/00

(54) **A BRINE INJECTION MACHINE FOR INJECTING BRINE TO MEAT PIECES**

(71) Applicant: Metalquimia, S.A.U., 17007 Girona (ES)
(72) Inventor: LAGARES GAMERO, Josep, 17850 Besalú (ES)
(74) Representative: Torner, Juncosa I Associats, SL

(57) **Abstract**

A brine injection machine for injecting brine to meat pieces is provided. The machine comprises an auxiliary frame (10) configured to carry a pre-filtering unit (6), and a pre-filtered brine tank (7), the auxiliary frame being detachable with regard to the main frame (1), and further comprises a well (28) that is formed below a bottom plane of the pre-filtered brine tank (7). A plurality of level sensors (32) are arranged at different heights in the pre-filtered brine tank (7) including the well (28) and configured for detecting an amount of pre-filtered brine in the pre-filtered brine tank (7), and an electronic control device is configured for controlling the brine injection operation as a function of the amount of pre-filtered brine in the pre-filtered brine tank (7) that can be recycled, as detected by the level sensors (32) at the end of a brine injection cycle.

## Description

### Technical field

The present invention generally relates to a brine injection machine for injecting brine to meat pieces, and particularly, to an injecting machine having one or more injection heads for consecutively injecting brine into meat pieces conveyed on a conveyor and a brine filtering unit completely integrated in a main frame of the machine.

The brine injection machine belongs to the technical field of conditioning meat pieces for preparing meat products such as hams and shoulder blades, and in particular cooked pork.

### Background of the invention

Brine injection machines are well known in the prior art. For example, document EP 2822390 A1, of the same applicant of the present invention, discloses a brine injection machine used to inject brine in pieces of meat product. The injection machine comprises a frame, a conveyor arranged for intermittently advancing meat pieces along a horizontal path from an inlet to an outlet of the frame, two injection heads arranged above the conveyor, each provided with a plurality of injection needles connected to respective brine supply circuits, head drive means configured for alternately reciprocating the injection heads between an inactive upper position, in which the injection needles do not interfere with the meat pieces being advanced by the conveyor, and an injection lower position, in which the injection needles are stuck into to the meat pieces stopped on the conveyor to perform a brine injection operation. However, this document does not disclose a brine filtering unit associated to the injection machine.

Document EP 2384802 A1, of the same applicant of the present invention, discloses a brine filtering device which is applicable, as an external unit, to an injection machine as, for example, the one described in cited document EP 2822390 A1. The filtering device is used for filtering the brine that is supplied to the injection machine as well as the surplus brine from the injection process, and for recycling the filtered brine again towards the injection machine during the operation thereof. This brine filtering device comprises a pre-filtering unit having two pre-filtration coaxial rotary drums configured and arranged for receiving the surplus brine from the injection machine, pre-filtering the surplus brine and gathering it in a pre-filtered brine tank, and two fine filtration sleeves arranged in a position adjacent to a bottom of the pre-filtered brine tank and connected through respective independent valve devices to a manifold which is in turn connected to an outlet of the pre-filtered brine tank.

The valve device or each one of the two fine filtration sleeves of document EP 2384802 A1 is operated by pivoting the corresponding fine filtration sleeve between a working position, in which the fine filtration sleeve is submerged in the brine in the pre-filtered brine tank and the valve device is open, and a cleaning and maintenance position, in which the fine filtration element is partially or fully emerged from the brine in the pre-filtered brine tank and the valve device is closed. The manifold is connected to an outlet of the pre-filtered brine tank which in turn is connected to a pumping unit.

Document US 6497176 B2 discloses a brine injection machine comprising a main frame defining a horizontal path from an inlet to an outlet, a conveyor arranged for intermittently advancing meat pieces along the horizontal path, an injection section comprising a plurality of injector modules arranged above the conveyor, each injecting module provided with a plurality of injection needles connected to a brine supply circuit, power drive means configured for reciprocating the one or more injector modules between an inactive upper position, in which the injection needles do not interfere with the meat pieces being advanced by the conveyor, and an injection lower position, in which the injection needles are stuck into the meat pieces stopped on the conveyor to perform a brine injection operation,

Document US 6497176 B2 further discloses a pre-filtering unit arranged below the conveyor so as to receive surplus brine from the injection operation and configured for pre-filtering the surplus brine, a pre-filtered brine tank arranged below the pre-filtering unit and configured for gathering pre-filtered brine from the pre-filtering unit, and a pumping unit configured and arranged for suctioning the pre-filtered brine from the pre-filtered brine tank through a fine filtering unit and recycling the filtered brine to the brine supply circuit.

In the brine injection machine of the cited document US 6497176 B2, the pre-filtered brine tank and the pumping unit are mounted inside the main frame, the fine filtering unit is installed inside the pre-filtered brine tank and an empty space is provided in the main frame between the conveyor and an open top of the pre-filtered brine tank. The pre-filtering unit is mounted to a detachable auxiliary frame movable between an operative position, in which the detachable auxiliary frame and the pre-filtering unit are inside the main frame, and a cleaning and maintenance position, in which the detachable auxiliary frame and the pre-filtering unit are outside the main frame.

Document EP 1435202 B1, of the same applicant of the present invention, discloses a tenderising machine having a tenderising unit arranged above an intermittent conveyor and provided with a plurality of tenderising stabs. The tenderising unit is driven to reciprocate between an inactive upper position, in which the tenderising stabs do not interfere with the meat pieces being advanced by the conveyor, and a tenderising lower position, in which the tenderising stabs are stuck into the previously injected meat pieces stopped on the conveyor.

### Disclosure of the invention

The present invention relates to a brine injection machine which is useful for injecting brine to meat pieces, although it can be also used to inject brine to other food items.

The brine injection machine of the present invention comprises a main frame which defines a horizontal path from an inlet to an outlet thereof, a conveyor arranged for intermittently advancing meat pieces along the horizontal path. Arranged above the conveyor there is an injection section which comprises one or more injection heads provided with a plurality of injection needles. The needles are connected to a brine supply circuit.

Head drive means included in the main frame are configured and arranged for reciprocating the one or more injection heads between an inactive upper position, in which the injection needles do not interfere with the meat pieces while the meat pieces are advanced by the conveyor, and an injection lower position, in which the injection needles are stuck into the meat pieces and perform a brine injection operation while the meat pieces are stopped on the conveyor.

The brine injection machine further comprises a pre-filtering unit arranged below the conveyor so as to receive surplus brine from the brine injection operation and configured for pre-filtering the surplus brine, a pre-filtered brine tank arranged below the pre-filtering unit and configured for gathering pre-filtered brine from the pre-filtering unit, and a pumping unit configured and arranged for suctioning the pre-filtered brine from the pre-filtered brine tank through a fine filtering unit and recycling the filtered brine to the brine supply circuit.

The pre-filtered brine tank and the pumping unit are mounted inside the main frame. The fine filtering unit is installed inside the pre-filtered brine tank. The pre-filtering unit is mounted to a detachable auxiliary frame. An empty space is provided in the main frame between the conveyor and an open top of the pre-filtered brine tank, and the detachable auxiliary frame is movable between an operative position, in which the detachable auxiliary frame and the pre-filtering unit are inside the main frame, and a cleaning and maintenance position, in which the detachable auxiliary frame and the pre-filtering unit are outside the main frame.

The pre-filtered brine tank has a bottom in which a well is formed. The fine filtering unit comprises one or more fine filtration elements arranged adjacent to the bottom of the pre-filtered brine tank and an additional fine filtration element arranged adjacent to a bottom of the well, and a plurality of level sensors are arranged at different heights in the pre-filtered brine tank including the well.

The plurality of level sensors are configured and arranged for detecting an amount of pre-filtered brine in the pre-filtered brine tank, and an electronic control device is configured to control the brine injection operation as a function of the amount of pre-filtered brine in the pre-filtered brine tank as detected by the level sensors at the end of a brine injection cycle.

This construction of the brine injection machine of the present invention has the advantage of requiring less surface area to operate since the pre-filtering unit, the fine filtering unit, the pre-filtered brine tank and the pumping unit are completely integrated within the main frame during operation.

A further advantage is that the one or more injection heads can be inspected, cleaned, serviced and repaired more easily without the hindrance of the pre-filtering unit, the fine filtering unit, the pre-filtered brine tank and the pumping unit since these elements are within the main frame.

With the filtration equipment integrated within the main frame the return brine circuit is advantageously shortened. Furthermore, with the electronic control device in cooperation with the level sensors arranged at different heights in the pre-filtered brine tank and in the well the amount of brine in the pre-filtered brine tank can be permanently controlled and the amount of meat pieces to be injected at the end of a brine injection cycle can be adjusted as a function of the amount of brine remaining in the pre-filtered brine tank, thereby the brine residue left in the bottom of the well at the end of a brine injection cycle is minimized.

In one embodiment, the pre-filtering unit comprises a coarse filtration belt mounted on guide rollers and driven by an electric motor. The coarse filtration belt has a filtering section and a cleaning section which cooperates with a scrapper. The filtering section is inclined towards a lower end thereof and is arranged inside an enclosure that comprises a surplus brine receiving funnel located above the lower end and a pre-filtered brine outlet located below the inclined filtering section. An upper portion of the pre-filtering unit including the surplus brine receiving funnel and the pre-filtered brine outlet of the enclosure is configured to fit in the empty space provided in the main frame between the conveyor and the open top of the pre-filtered brine tank.

In one embodiment, a brine collecting tray having a discharge aperture is arranged below the conveyor. The brine collecting tray is configured to collect the surplus brine from the brine injection operation and conduct the surplus brine towards the discharge aperture. In this case, the empty space of the main frame is provided between a region of the brine collecting tray including the discharge aperture and the open top of the pre-filtered brine tank. The brine receiving funnel of the pre-filtering unit is located below the discharge aperture when the auxiliary frame is in the operative position.

The pre-filtering unit includes preferably a side portion where the cleaning section of the coarse filtration belt, the scrapper and a waste collection container are arranged. An additional empty space is provided in the main frame between a side wall thereof adjacent to the outlet of the horizontal path and a side wall of the pre-filtered brine tank, and the side portion of the pre-filtering unit is configured to fit in this additional empty space when the auxiliary frame is in the operative position.

In one embodiment, the scrapper is a rotary scrapper driven by the same electric motor than the coarse filtration belt or by an independent electric motor. In an alternative embodiment, the scrapper is a stationary scrapper.

The auxiliary frame comprises, for example, a power electrical connector and a signal electrical connector configured for being connected to a power electrical connector and to a signal electrical connector of the main frame when the auxiliary frame is in the operative position and for being disconnected from the power electrical connector and from the signal electrical connector of the main frame when the auxiliary frame is to be moved to the cleaning and maintenance position.

Preferably, the auxiliary frame is provided with wheels configured for rolling on the floor, thereby the auxiliary frame can be easily moved between the operative position and the cleaning and maintenance position, and even moved away from the main frame of the injection machine.

In one embodiment, the fine filtering unit comprises two or more fine filtration elements which are connected through a manifold to an outlet of the pre-filtered brine tank, and the additional fine filtration element is connected to an additional outlet of the pre-filtered brine tank. The outlet and the additional outlet of the pre-filtered brine tank are connected to an additional manifold through respective electrovalves, and the pumping unit is connected to the additional manifold.

In this case, for example, the two or more fine filtration elements are connected to the manifold through respective independent valve devices, and each valve device is operated by pivoting the corresponding fine filtration element between a working position, in which the fine filtration element is submerged in the brine in the pre-filtered brine tank and the valve device is open, and a cleaning and maintenance position, in which the fine filtration element is partially or fully emerged from the brine in the pre-filtered brine tank and the valve device is closed.

Similarly, the additional fine filtration element is connected to the additional outlet through an additional valve device, for example. The additional valve device is operated by pivoting the additional fine filtration element between a working position, in which the fine additional fine filtration element is submerged in the brine in the well and the additional valve device is open, and a cleaning and maintenance position, in which the additional fine filtration element is partially or fully emerged from the brine in the well and the additional valve device is closed.

Optionally, the injection section comprises two injection heads arranged above the conveyor and the head drive means are configured for alternately reciprocating the two injection heads between respective inactive upper positions and injection lower positions. In this case, the two injection heads are provided with respective injection needles connected to respective independent branches of the brine supply circuit and the pumping unit comprises two pumps having respective inlets connected to the additional manifold and respective outlets connected to the independent branches of the brine supply circuit.

Preferably, the head drive means driving the two injection heads are independent electric servomotors, and the two pumps are also driven by independent electric linear actuators. In the case where a single injection head is provided, the head drive means comprise servomotors and the pumping unit comprises a single pump driven by an electric linear actuator. Thus, with the use of electric actuators instead of conventional hydraulic actuators the electrical efficiency is significantly increased and the acoustic level when the machine is in operation is greatly reduced. Also, the electric actuators are accurately and straightforwardly controlled by the electronic control device.

Optionally, the brine injection machine further comprises a tenderising unit arranged above the conveyor downstream the injection section. The tenderising unit is provided with a plurality of tenderising stabs and is driven to reciprocate between an inactive upper position, in which the tenderising stabs do not interfere with the meat pieces while the meat pieces are advanced by the conveyor, and a tenderising lower position, in which the tenderising stabs are stuck into the previously injected meat pieces while the meat pieces are stopped on the conveyor.

### Brief description of the drawings

The above features and advantages will be more fully understood from the following detailed description of a preferred embodiment with reference to the accompanying drawings, in which:
Fig. 1 is a perspective view of a brine injection machine according to an embodiment of the present invention with an auxiliary frame coupled to a main frame in an operative position;
Fig. 2 is a perspective view of the brine injection machine with the auxiliary frame uncoupled and spaced apart from the main frame in a cleaning and maintenance position;
Fig. 3 is a sectional front view of the brine injection machine with the auxiliary frame coupled to the main frame in the operative position;
Fig. 4 is an enlarged detail of Fig. 3 showing the auxiliary frame coupled to the main frame in the operative position;
Fig. 5 is a sectional front view of the brine injection machine showing the main frame alone and the several elements mounted thereto, without the auxiliary frame;
Fig. 6 is a sectional perspective view of the auxiliary frame alone showing the several elements mounted thereto;
Fig. 7 is a perspective view showing in dashed lines a pre-filtered brine tank and in solid lines a fine filtering unit inside the pre-filtered brine tank and a pumping unit associated thereto, all them being mounted to the main frame; and
Fig. 8 is a partial perspective view showing electrical connections between the main frame and the auxiliary frame.

### Detailed description of a preferred embodiment

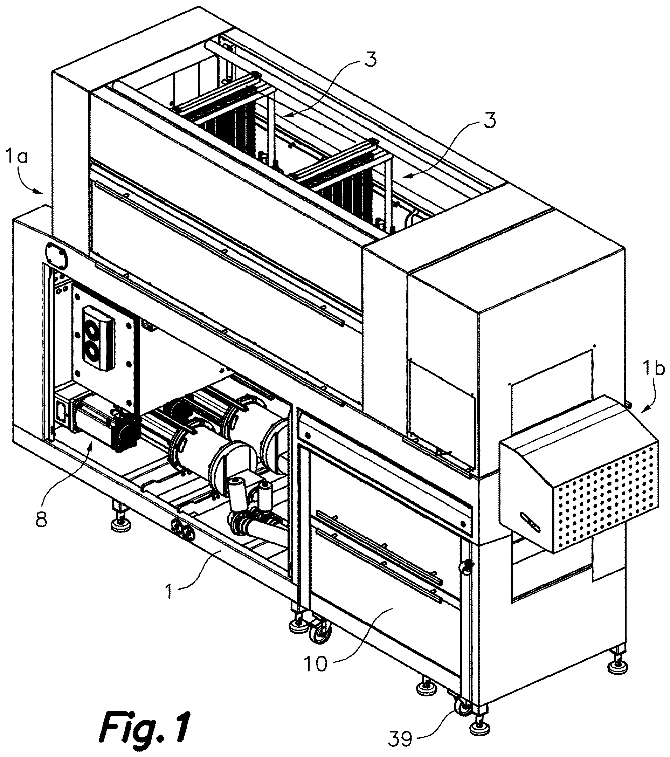

Referring to the Figs. 1 to 7, a brine injection machine according to a preferred embodiment of the present invention is described. The brine injection machine, which is useful, for example, for injecting brine to meat pieces, comprises a main frame 1 defining a horizontal path from an inlet 1a to an outlet 1b, and a conveyor 2 driven by electric actuators is arranged for intermittently advancing meat pieces along the horizontal path. Arranged above the conveyor 2 there is an injection section comprising two injection heads 3. Each injection head 3 is provided with a plurality of injection needles, and the injection needles of the two injection heads 3 are connected to independent branches of a brine supply circuit. A fresh brine supply (not shown) is arranged for supplying fresh brine to the brine supply circuit.

Head drive means comprising independent electric linear actuators 41 are arranged in the main frame 1 and configured for alternately reciprocating the two injection heads 3 between an inactive upper position, in which the injection needles do not interfere with the meat pieces that are being advanced by the conveyor 2, and an injection lower position, in which the injection needles are stuck into the meat pieces and perform a brine injection operation while they are stopped on the conveyor 2.

For example, the arrangement and operation of the two injection heads disclosed in the previously cited document EP 2822390 A1 may be useful for the injection section in the injection machine of the present invention.

Above the conveyor 2 and downstream the injection section a tenderising unit 38 is arranged. The tenderising unit 38 is provided with a plurality of tenderising stabs and is driven by one or more electric actuators 48 to reciprocate between an inactive upper position, in which the tenderising stabs do not interfere with the meat pieces being advanced by the conveyor 2, and a tenderising lower position, in which the tenderising stabs are stuck into the previously injected meat pieces stopped on the conveyor 2.

The previously cited document EP 1435202 B1, for example, discloses a tenderizing head which may be useful as the tenderising unit 38 in the injection machine of the present invention.

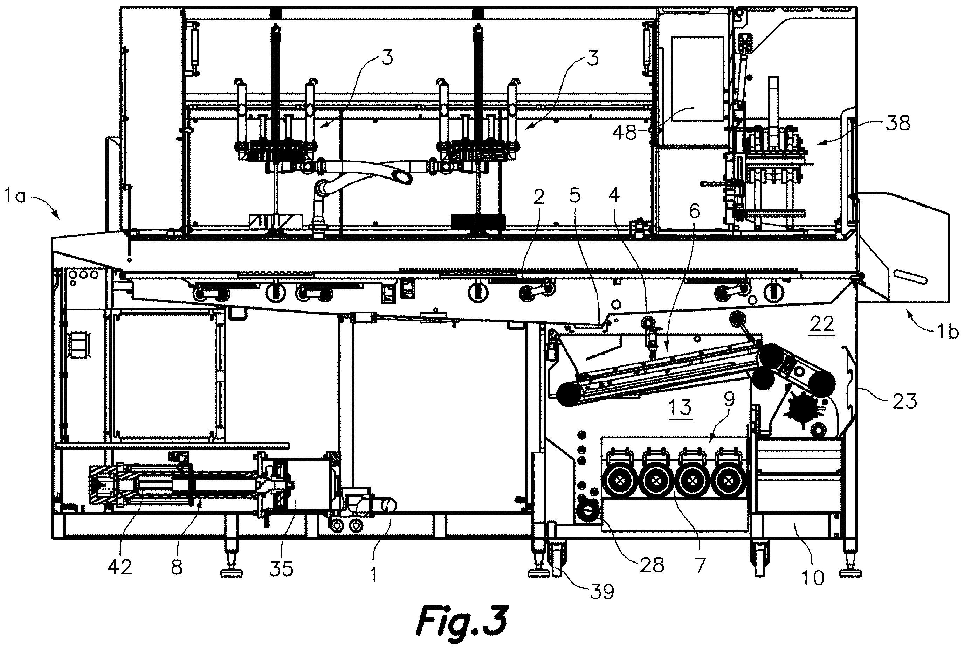

As shown in Figs. 3, 4 and 5, a brine collecting tray 4 is arranged below the conveyor 2 and configured to collect the surplus brine from the brine injection operation and from the tenderizing operation and to conduit the surplus brine towards a discharge aperture 5. A pre-filtered brine tank 7 having an open top is mounted to the main frame 1 below a section of the collecting tray 4 that includes the discharge aperture 5. A fine filtering unit 9 is arranged inside the pre-filtered brine tank 7.

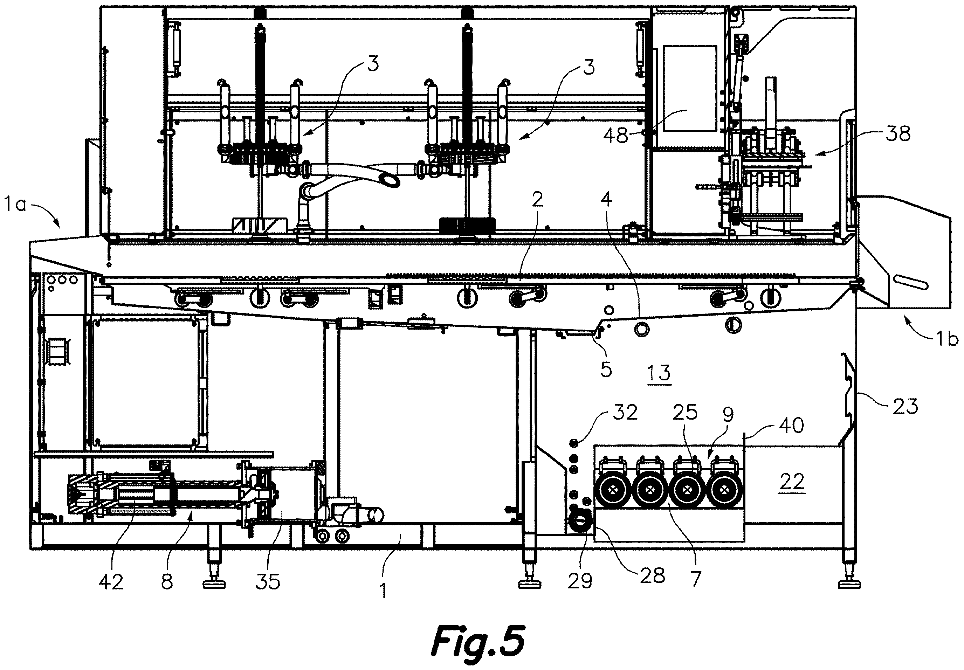

As better shown in Fig. 5, an empty space 13 is provided in the main frame 1 between a region of the brine collecting tray 4 including the discharge aperture 5 and the open top of the pre-filtered brine tank 7 and an additional empty space 22 is provided in the main frame 1 between a side wall 23 of the main frame 1 adjacent to the outlet 1b of the horizontal path and a side wall 40 of the pre-filtered brine tank 7. The empty space 13 and the additional empty space 22 are open at a front side of the main frame 1.

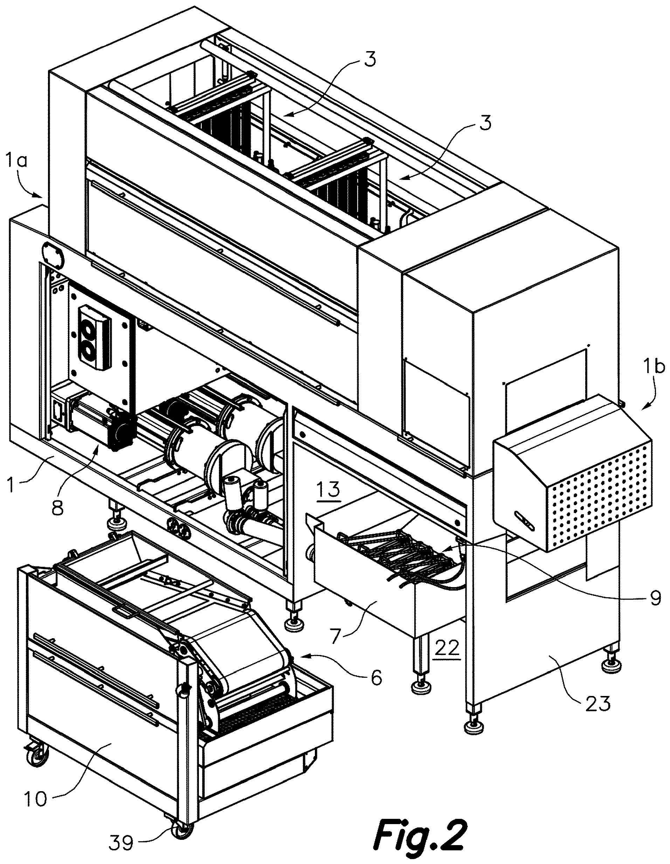

The brine injection machine further comprises a detachable auxiliary frame 10 carrying a pre-filtering unit 6. The auxiliary frame 10 is provided with wheels 39 configured for rolling on the floor and is movable between an operative position (Figs. 1, 3 and 4), in which the detachable auxiliary frame 10 and the pre-filtering unit 6 are inside the main frame 1, and a cleaning and maintenance position (Fig. 2), in which the detachable auxiliary frame 10 and the pre-filtering unit 6 are outside the main frame 1.

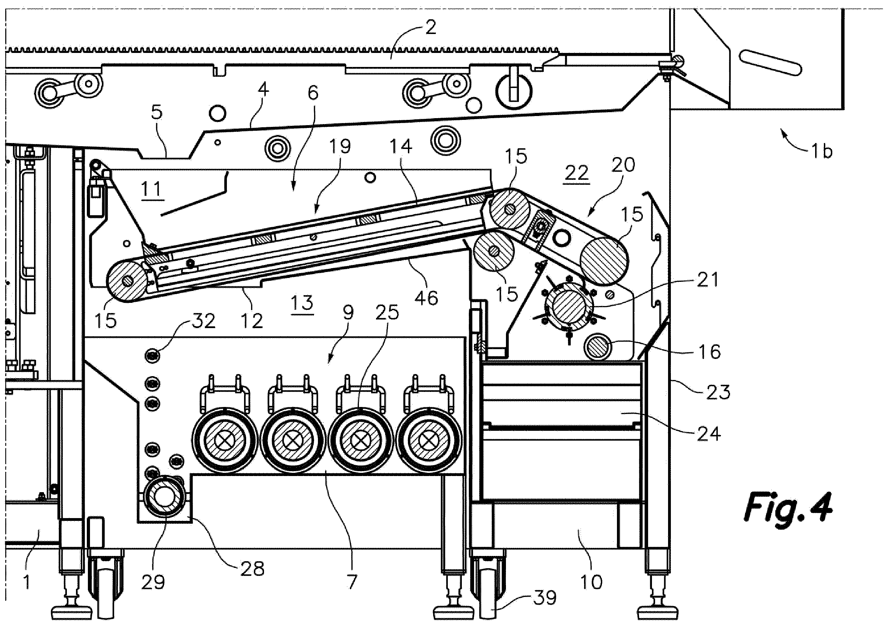

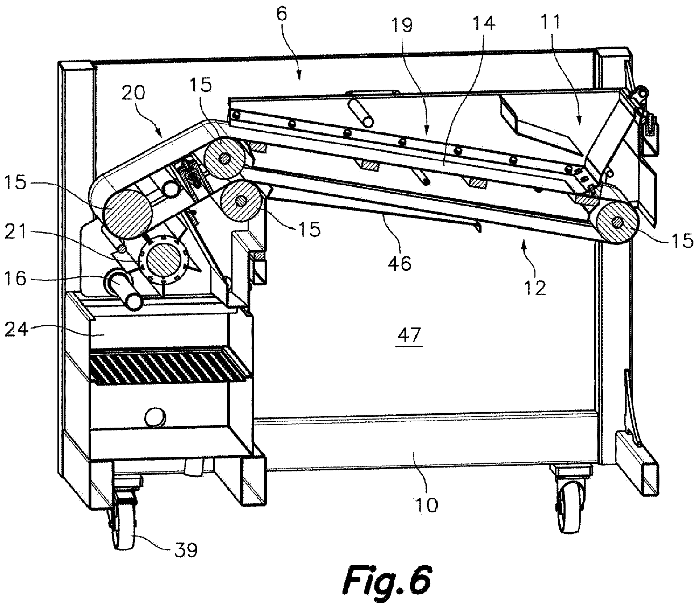

As better shown in Figs. 4 and 6, the pre-filtering unit 6 carried by the auxiliary frame 10 comprises a coarse filtration belt 14 which is mounted on guide rollers 15 and driven by an electric motor 16. The guide rollers 15 are positioned so that the coarse filtration belt 14 has an inclined filtering section 19 and a cleaning section 20 which cooperates with a rotary scrapper 21 which is driven, for example, by the same electric motor 16 than the coarse filtration belt 14.

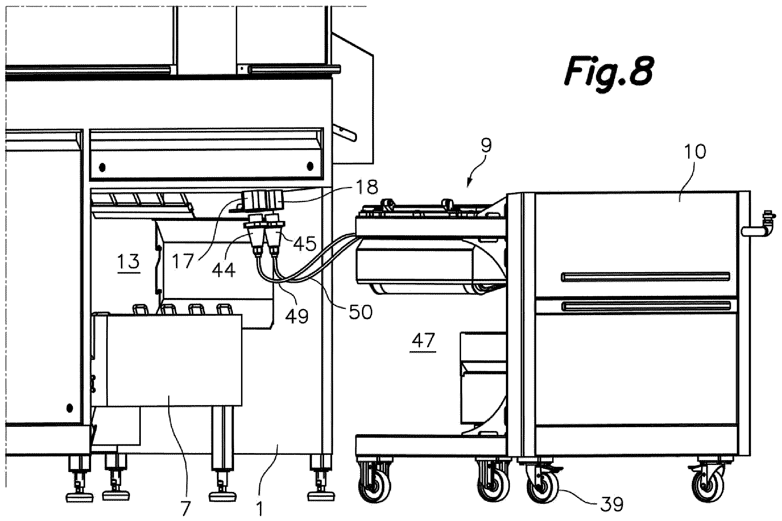

As shown in Fig. 8, the auxiliary frame 10 comprises a power electrical connector 17 and a signal electrical connector 18 configured for being connected to a power electrical connector 44 and to a signal electrical connector 45 of the main frame 1 when the auxiliary frame 10 is in the operative position, and for being disconnected from the power electrical connector 44 and from the signal electrical connector 45 of the main frame 1 when the auxiliary frame 10 is to be moved to the cleaning and maintenance position. For example, the power electrical connector 17 and the signal electrical connector 18 of the auxiliary frame 10 are arranged at end of respective flexible electric wires 49, 50 which are long enough to enable connect and disconnect the connectors when the auxiliary frame 10 is outside the main frame and adjacent thereto.

The inclined filtering section 19 is arranged in the auxiliary frame 10 inside an enclosure 46 which comprises a surplus brine receiving funnel 11 located above a lower end of the inclined filtering section 19 and a pre-filtered brine outlet 12 located below the inclined filtering section 19. The cleaning section 20 and the rotary scrapper 21 are arranged in the auxiliary frame 10 above a waste collection container 24.

In the auxiliary frame 10, an upper portion of the pre-filtering unit 6, including the filtering section 19 of the coarse filtration belt 14 and the enclosure 46 with the surplus brine receiving funnel 11 and the pre-filtered brine outlet 12, is configured to fit in the empty space 13 of the main frame 1, and a side portion of the pre-filtering unit 6, including the cleaning section 20 of the coarse filtration belt 14, the rotary scrapper 21 and the waste collection container 24 is configured to fit in the additional empty space 22 when the auxiliary frame 10 is in the operative position.

In concordance, a complementary empty space 47 (Fig. 6) is provided in the auxiliary frame 10 below the enclosure 46 and at an inner side of the side portion of the pre-filtering unit 6, and the pre-filtered brine tank 7 in the main frame 1 is configured to fit in the complementary empty space 47 of the auxiliary frame 10 when the auxiliary frame 10 is in the operative position.

When the auxiliary frame 10 is in the operative position, as better shown in Figs. 3 and 4, the brine receiving funnel 11 formed in the enclosure 46 of the pre-filtering unit 6 is located below the discharge aperture 5 of the brine collecting tray 4 as to receive surplus brine from the brine injection operation and the pre-filtered brine outlet 12 formed in the enclosure 46 of the pre-filtering unit 6 is located above the open top of the pre-filtered brine tank 7 so as to pour the pre-filtered brine into the pre-filtered brine tank 7 where the pre-filtered brine is gathered.

A well 28 is formed in a bottom of the pre-filtered brine tank 7 and the fine filtering unit 9 comprises four fine filtration elements 25 arranged adjacent to the bottom of the pre-filtered brine tank 7 and an additional fine filtration element 29 arranged adjacent to a bottom of the well 28. A pumping unit 8 configured and arranged for suctioning the pre-filtered brine from the pre-filtered brine tank 7 through the fine filtering unit 9 and recycling the filtered brine to the brine supply circuit is installed in the main frame 1.

Arranged at different heights in the pre-filtered brine tank 7and in the well 28 there are a plurality of level sensors 32 which are configured for detecting an amount of pre-filtered brine in the pre-filtered brine tank 7 including the well 28, and an electronic control device is configured for continuously controlling the brine injection operation as a function of the amount of pre-filtered brine in the pre-filtered brine tank 7 as detected by the level sensors 32, and specially for controlling the brine injection operation as a function of the amount of pre-filtered brine in the well 28 at the end of a brine injection cycle.

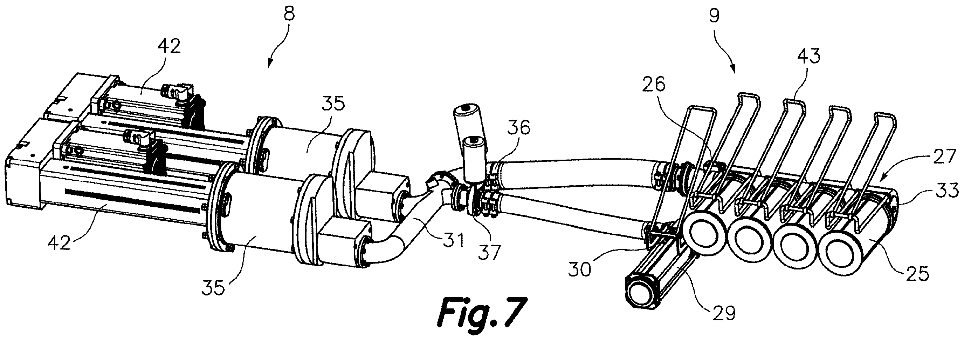

As better shown in Fig. 7, the four fine filtration elements 25 of the fine filtering unit 9 are connected through a manifold 27 to an outlet 26 of the pre-filtered brine tank 7, and the additional fine filtration element 29 is connected to an additional outlet 30 of the pre-filtered brine tank 7. The outlet 26 and the additional outlet 30 of the pre-filtered brine tank 7 are connected to an additional manifold 31 through respective electrovalves 36, 37. The pumping unit 8 comprises two brine pumps 35 with respective inlets connected to the additional manifold 31 and respective outlets connected to the independent branches of the brine supply circuit. The two brine pumps 35 are, for example, two plunger pumps driven by independent electric linear actuators 42.

In the fine filtering unit 9, the four fine filtration elements 25 are connected to the manifold 27 through respective independent valve devices 33, and each valve device 33 is operated by pivoting the corresponding fine filtration element 25 between a working position, in which the fine filtration element 25 is submerged in the brine in the pre-filtered brine tank 7 and the valve device 33 is open, and a cleaning and maintenance position, in which the fine filtration element 25 is partially or fully emerged from the brine in the pre-filtered brine tank 7 and the valve device 33 is closed. Handles 43 are provided for manually moving the fine filtration elements 25 between the working position and the cleaning and maintenance position.

Similarly, the additional fine filtration element 29 is connected to the additional outlet 30 through an additional valve device 34 which is operated by pivoting the additional fine filtration element 29 between a working position, in which the fine additional fine filtration element 29 is submerged in the brine in the well 28 and the additional valve device 34 is open, and a cleaning and maintenance position, in which the additional fine filtration element 29 is partially or fully emerged from the brine in the well 28 and the additional valve device 34 is closed.

For example, the arrangement of fine filtration elements disclosed in the previously cited document EP 2384802 A1 may be useful for the fine filtering unit 9 in the injection machine of the present invention.

An alternative embodiment having a single injection head 3 and s single brine pump 35 is also within the scope of the present invention.

An alternative embodiment having less than four fine filtration elements 25 connected to the outlet 26 of the pre-filtered brine tank 7 with or without manifold 27 and with or without independent valve devices 33 is also within the scope of the present invention.

An alternative embodiment having no tenderising unit 38 is also within the scope of the present invention.

The scope of the present invention is defined in the attached claims.

## Claims

1. A brine injection machine for injecting brine to meat pieces, comprising:
a main frame (1) defining a horizontal path for the meat pieces from an inlet to an outlet;
a conveyor (2) arranged for intermittently advancing meat pieces along the horizontal path;
an injection section comprising at least one injection head (3) arranged above the conveyor (2) and provided with a plurality of injection needles connected to a brine supply circuit;
head drive means configured for reciprocating the at least one injection head (3) between an inactive upper position, in which the injection needles do not interfere with the meat pieces being advanced by the conveyor (2), and an injection lower position, in which the injection needles are stuck into the meat pieces stopped on the conveyor (2) and perform a brine injection operation;
a pre-filtering unit (6) arranged below the conveyor (2) so as to receive surplus brine from the brine injection operation and configured for pre-filtering the surplus brine;
a pre-filtered brine tank (7) arranged below the pre-filtering unit (6) and configured for gathering pre-filtered brine from the pre-filtering unit (6); and
a pumping unit (8) configured and arranged for suctioning the pre-filtered brine from the pre-filtered brine tank (7) through at least a fine filtering unit (9) and recycling the filtered brine to the brine supply circuit;
wherein an empty space (13) is provided in the main frame (1) between the conveyor (2) and an open top of the pre-filtered brine tank (7);
**characterized in that:**
the auxiliary frame (10) is configured for carrying the pre-filtering unit (6) and is detachable from the main frame (1), such that the auxiliary frame (10) is movable between an operative position, in which the detachable auxiliary frame (10) and the pre-filtering unit (6) are inside the main frame (1), and a cleaning and maintenance position, in which the detachable auxiliary frame (10) and the pre-filtering unit (6) are outside the main frame (1);
a well (28) is formed below a bottom plane of the pre-filtered brine tank (7);
the fine filtering unit (9) comprises at least one fine filtration element (25) arranged adjacent to the bottom of the pre-filtered brine tank (7) and an additional fine filtration element (29) arranged adjacent to a bottom of the well (28);
a plurality of level sensors (32) is arranged at different heights in the pre-filtered brine tank (7) including the well (28) and configured for detecting an amount of pre-filtered brine in the pre-filtered brine tank (7); and
an electronic control device is configured for controlling the brine injection operation as a function of the amount of pre-filtered brine in the pre-filtered brine tank (7) that can be recycled, as detected by the level sensors (32) at the end of a brine injection cycle,
so that the brine re-cycling process to the brine supply circuit from the pre-filtered brine tank (7) can be carried out until only a given amount of brine remains in the pre-filtered brine tank (7) filling only the well (28).

2. The brine injection machine according to claim 1, wherein the pre-filtering unit (6) comprises a coarse filtration belt (14) mounted on guide rollers (15) and driven by an electric motor (16), the coarse filtration belt (14) has an inclined filtering section (19) arranged inside an enclosure (46) and a cleaning section (20) which cooperates with a scrapper (21), the enclosure (46) comprises a surplus brine receiving funnel (11) located above a lower end of the inclined filtering section (19) and a pre-filtered brine outlet (12) located below the inclined filtering section (19), and an upper portion of the pre-filtering unit (6) including the surplus brine receiving funnel (11) and the pre-filtered brine outlet (12) is configured to fit in the empty space (13).

3. The brine injection machine according to claim 2, wherein a brine collecting tray (4) is arranged below the conveyor (2) and configured to collect the surplus brine from the brine injection operation, the brine collecting tray (4) has a discharge aperture (5), and the empty space (13) is provided between a region of the brine collecting tray (4) including the discharge aperture (5) and the open top of the pre-filtered brine tank (7), and the brine receiving funnel (11) located below the discharge aperture (5) in the operative position.

4. The brine injection machine according to claim 2 or 3, wherein an additional empty space (22) is provided between a side wall (23) of the main frame (1) adjacent to the outlet of the horizontal path and a side wall (40) of the pre-filtered brine tank (7), and a side portion of the pre-filtering unit (6) including the cleaning section (20) of the coarse filtration belt (14), the scrapper (21) and a waste collection container (24) is configured to fit in the additional empty space (22) in the operative position.

5. The brine injection machine according to claim 2, 3 or 4, wherein the auxiliary frame (10) comprises a power electrical connector (17) and a signal electrical connector (18) configured for being connected to a power electrical connector (44) and to a signal electrical connector (45) of the main frame (1) in the operative position and for being disconnected from the power electrical connector (44) and from the signal electrical connector (45) of the main frame (1) when the auxiliary frame (10) is to be moved to the cleaning and maintenance position.

6. The brine injection machine according to claim 1, wherein the fine filtering unit (9) comprises at least two fine filtration elements (25) which are connected through a manifold (27) to an outlet (26) of the pre-filtered brine tank (7), the additional fine filtration element (29) is connected to an additional outlet (30) of the pre-filtered brine tank (7), the outlet (26) and the additional outlet (30) of the pre-filtered brine tank (7) are connected to an additional manifold (31) through respective electrovalves, and the pumping unit (8) is connected to the additional manifold (31).

7. The brine injection machine according to claim 6, wherein the injection section comprises two injection heads (3) arranged above the conveyor (2) and alternately reciprocated by the head drive means between respective inactive upper positions and injection lower positions, the injection heads (3) are provided with respective injection needles connected to respective independent branches of the brine supply circuit, and the pumping unit (8) comprises two pumps (35) with respective inlets connected to the additional manifold (31) and respective outlets connected to the independent branches of the brine supply circuit.

8. The brine injection machine according to claim 6, wherein the at least two fine filtration elements (25) are connected to the manifold (27) through respective independent valve devices (33), and each valve device (33) is operated by pivoting the corresponding fine filtration element (25) between a working position, in which the fine filtration element (25) is submerged in the brine in the pre-filtered brine tank (7) and the valve device (33) is open, and a cleaning and maintenance position, in which the fine filtration element (25) is partially or fully emerged from the brine in the pre-filtered brine tank (7) and the valve device (33) is closed.

9. The brine injection machine according to claim 6, wherein the additional fine filtration element (29) is connected to the additional outlet (30) through an additional valve device (34) which is operated by pivoting the additional fine filtration element (29) between a working position, in which the fine additional fine filtration element (29) is submerged in the brine in the well (28) and the additional valve device (34) is open, and a cleaning and maintenance position, in which the additional fine filtration element (29) is partially or fully emerged from the brine in the well (28) and the additional valve device (34) is closed.

10. The brine injection machine according to any one of claims 1 to 9, further comprising a tenderising unit (38) arranged above the conveyor (2) downstream the injection section and provided with a plurality of tenderising stabs, the tenderising unit (38) being driven to reciprocate between an inactive upper position, in which the tenderising stabs do not interfere with the meat pieces being advanced by the conveyor (2), and a tenderising lower position, in which the tenderising stabs are stuck into the previously injected meat pieces stopped on the conveyor (2).

11. The brine injection machine according to any one of claims 1 to 10, wherein the auxiliary frame (10) is provided with wheels (39) configured for rolling on the floor.

12. The brine injection machine according to claim 2, 3 or 4, wherein the scrapper (21) is a rotary scrapper driven by the same electric motor (16) than the coarse filtration belt (14) or by an independent electric motor.

13. The brine injection machine according to claim 7, wherein the head drive means driving the two injection heads (3) are independent electric linear actuators (41), and the two pumps (35) are driven by independent electric linear actuators (42).

14. The brine injection machine according to claim 1, wherein the well (28) is located next to one of the walls of the pre-filtered brine tank (7).

15. The brine injection machine according to claim 6, wherein the pumping unit (8) comprises two brine pumps (35) with respective inlets connected to the additional manifold (31) and respective outlets connected to the independent branches of the brine supply circuit.
